# EUROPEAN PATENT APPLICATION

(11) **EP 0 696 600 A2**
(43) Date of publication of application: **14.02.1996**
(21) Application number: 95112417.1
(22) Date of filing: 07.08.1995
(51) Int. Cl.: C08F 4/646, C08F 10/00

(54) **Catalyst and polymerization of olefins**

(30) Priority: 08.08.1994 US 287399
(71) Applicant: PHILLIPS PETROLEUM COMPANY, Bartlesville Oklahoma 74004 (US)
(72) Inventor: Stacy, Elizabeth M., Bartlesville, Oklahoma 74006 (US); Collins, Kathy S., Barlesville, Oklahoma 74003 (US)
(74) Representative: Dost, Wolfgang, Dr.rer.nat., Dipl.-Chem.

(57) **Abstract**

A catalyst particularly suitable for use in slurry, particle form, type olefin polymerization is produced by admixing an inorganic oxide with an organic solution of a dihydrocarbyl magnesium compound to form a slurry and then contacting the slurry with a chlorinating agent to convert the dihydrocarbyl magnesium compound to magnesium dichloride, separating the resulting solid support from the liquid, then contacting the separated solid support with a solution of an organic reducing agent, then separating that resulting solid from the liquid, then contacting the recovered solid with a liquid form of a transition metal compound and then separating that resulting solid from the liquid phase. The use of the catalyst in polymerization is also disclosed.

## Description

### Field of the Invention

The present invention relates to the polymerization of alpha olefins. Another aspect of the present invention relates to a new catalyst useful for the polymerization of alpha olefins. In accordance with still another object of the present invention there is provided a method for preparing the new catalyst.

### Background of the Invention

Numerous polyolefin polymerization catalysts have been developed since the initial discoveries of Ziegler and Natta regarding the use of transition metal compounds as catalysts for olefin polymerization. Various techniques of polymerizing olefins have also developed. Specifically, olefins can now be polymerized under gas phase conditions, solution conditions, and slurry conditions. Under the solution reactions, the polymerization is carried out at temperatures such that the formed polymer remains dissolved in the diluent. The polymer is then recovered by evaporating the diluent to recover the formed polymer. In slurry polymerizations, on the other hand, the polymerization is conducted under conditions such that the end product polymer is not dissolved in the polymerization diluent. This has an advantage in that it eliminates the utility requirements that accompany the separation of diluent from the polymer in the solution processes.

The present invention is concerned with catalysts prepared using reactants including a dihydrocarbyl magnesium, an organometallic reducing agent, and a transition metal halide. A number of different types of catalysts have been prepared using such reactants. Some examples are disclosed in EPC Application No. 267,794 and in U.S. Patent Nos. 3,787,384; 4,148,754; 4,173,547; 4,301,029; 4,508,843; 4,921,920; and 5,124,296. While those catalysts may be useful for particular types of polymerizations, the catalysts of the present invention are particularly useful for use in slurry polymerizations.

Slurry polymerizations are often conducted in a continuous loop reactor wherein monomer, catalyst, and diluent are continuously fed into the loop and solid polymer that is produced is allowed to settle out and periodically withdrawn from the loop. In such continuous slurry type polymerizations, factors other than activity and selectivity that are always present in solution processes are required. For example, in the slurry processes it is desirable to have a catalyst which does not form substantial amounts of soluble polymer since the soluble polymer tends to coat the surfaces inside the reactor and thus interfere with needed heat transfer. In addition, it is desirable to have a catalyst in a slurry polymerization which produces relatively high bulk density since if the bulk density is too low, the handling of the produced solid polymer becomes impracticle. It is further also an advantage to have the polymer formed in the form of particles that are relatively free of fines, since although fines can have a high bulk density, they also do not settle as well as larger particles and they present additional handling problems with the later processing of the polymer fluff.

An object of the present invention is to provide a catalyst that is particularly suitable for use in slurry polymerization.

### Summary of the Invention

In accordance with the present invention, there is provided a method for producing a solid polymerization catalyst comprising admixing an inorganic oxide with an organic solution of a dihydrocarbyl magnesium compound, optionally containing an organic electron donor compound, to form a slurry and then combining that slurry with a chlorinating agent capable of converting the dihydrocarbyl magnesium compound to magnesium dichloride, then separating the resulting solid from the components in the liquid phase to result in a solid support comprising magnesium chloride and the inorganic oxide, then contacting the separated solid support with a solution of an organic reducing agent, then separating the resulting solid from the components in the liquid phase, then contacting the recovered solid with a liquid form of a transition metal compound, and then separating that resulting solid from the components in the liquid phase.

The resulting solid transition metal-containing catalyst can then be used for the polymerization of olefins in combination with an organo metallic reducing agent cocatalyst.

### Detailed Description of the Invention

For reasons which will become more apparent after reading the examples, the inorganic oxide employed in the present invention is not so much as a carrier as a seeding component to assist in the precipitation of magnesium chloride. It is envisioned that any inorganic oxide that would not otherwise interfere with the required chemical reactions will be suitable. Examples of such inorganic oxides include silica, alumina, silica alumina, zirconia, magnesium oxide, titania, and the like. More specific examples of the inorganic oxides include microspherical silica obtained from Philadelphia Quartz under the identification MS-2540, Ketgen B alumina, microspherical silica obtained from Fuji Davison, silica obtained under the name 952 Grade from Davidson, and also fumed silica having the name Cab-O-Sil TS-720 obtained from Cabot Corporation.

Generally the inorganic oxide is used in the form of a relatively dry powder. Typically the particles would have an average particle size of from about 1 micron to about 250 microns, more preferably about 10 microns to about 150 microns. Drying of the inorganic solid can be effected by heating at 100°C to 1000°C, more preferably about 600°C. When the inorganic oxide is silica, it is generally heated at 200°C or above, more preferably 200°C to 850°C, and most preferably 600°C before being used. It is not, however, absolutely necessary to dry the inorganic oxide before its use in the present invention. However, the heating of silica at 600°C is generally viewed as sufficient to produce silica that is subtantially free of water and hydroxyl groups.

The first stage of the catalyst preparation involves admixing the inorganic oxide with an organic solution of a dihydrocarbyl magnesium compound, optionally containing an organic electron donor compound, to form a slurry. The amount of dihydrocarbyl magnesium solution employed can vary over a wide range. It is, however, desirable to use enough of the solution to result in what would actually be viewed as a slurry or suspension rather than a moistened mixture of the inorganic solid. Accordingly, the amount of the dihydrocarbyl magnesium solution should be greater than that needed for mere incipient wetness of the inorganic solid.

The amount of liquid used in forming the slurry can vary over a wide range, typically for practical reasons it would be in the range of about 5 mL per gram of oxide to about 200 mL per gram of oxide. It is currently preferred to employ a non-polar liquid as the solvent for the dihydrocarbyl magnesium compound. The preferred non-polar solvents are alkanes such as pentane, isopentane, hexane, n-heptane, octane, nonane, and decane, although a variety of other materials including cyclohexanes, such as cyclohexane, aromatics, such as benzene, and ethyl benzene may also be employed. Prior to use the liquids employed in this invention should preferably be purified, such as by percolation through silica gel and/or molecular sieves to remove traces of water, oxygen, polar compounds and other materials capable of adversely effecting catalyst activity in order to obtain the best results.

The dihydrocarbyl magnesium compounds employed have the formula MgR¹R², optionally mixed or complexed with trihydrocarbyl aluminum compounds of the general formula AlR³R⁴R⁵, in which formula R¹, R², R³, R⁴, and R⁵ are identical or different hydrocarbyl radicals containing 1 to 12 carbon atoms, more preferably 2 to 8 carbon atoms. It is currently preferred that the hydrocarbyl radicals be alkyl radicals.

The solution of dihydrocarbyl magnesium may contain a suitable electron donor. Examples include amines, amides, phosphines, sulfoxides, sulfones, alcohols, esters, diesters, phenols, ketones, and ethers. The currently preferred electron donors are aliphatic mono-oxygen ethers containing 2 to 20 carbon atoms. The molar ratio between the electron donor and the organomagnesium compound can vary over a wide range but would typically be in the range of about 0.01:1 to about 1:1.

The concentration of the organomagnesium compound in the solvent can also vary over a wide range. Typically it is desirable for the solution to contain no more organomagnesium compound than is necessary to produce the amount of magnesium chloride ultimately desired. While the ratio of the magnesium chloride to the inorganic oxide can vary over a wide range, typically the ratio is such that the resulting magnesium chloride, inorganic oxide particulate solid will contain from about 99 to about 10 weight percent magnesium chloride, more preferably about 99 to about 50 weight percent magnesium chloride.

The chlorinating agent used to convert the dihydrocarbyl magnesium to magnesium chloride can be selected from any suitable chlorinating agent. Examples include halosilanes, such as silicon tetrachloride, trichlorosilane, chlorotriethyl silane, trichlorophenyl silane, trichlorocyclohexyl silane, trichlorotolyl silane, trichloroallyl silane; metal chlorides including alkyl metal chlorides, such as ethylaluminum dichloride, diethylaluminum chloride, ethylaluminum sesquichloride, as well as tin tetrachloride, antimony pentachloride, boron trichloride, and POCl₃; and alkyl chlorides, such as carbon tetrachloride, dichloro methane, benzylchloride, tertiary butyl chloride, and the like. The currently preferred chlorinating agents are alkyl chlorides in which the alkyl group has 3 to 12 carbon atoms. Preferably the alkyl radical is a secondary or tertiary alkyl.

For the most efficient employment of the reactants the chlorinating agent is preferably employed in an amount sufficient to convert substantially all of the dihydrocarbyl magnesium compound in the solution to magnesium chloride. Typically for reactions involving alkyl metal chlorides the molar ratio of the alkyl metal chloride to the dihydrocarbyl magnesium is in the range of from about 1.5:1 to about 2.5:1, more preferably about 1.85:1 to about 2.2:1.

The temperature employed during the reaction between the chlorinating agent and the dihydrocarbyl magnesium compound is not considered to be particularly critical. Typically temperatures would be employed in the range of about 5°C to about 80°C, more preferably the reactions would be conducted at temperatures in the range of about 10°C to about 40°C. Slower reaction has been found to give a more desirable particle shape. Accordingly, lower precipitation temperatures are preferred. The reaction time can also vary over a wide range with times in the range of 0.5 to 10 hours being typical.

After the dihydrocarbyl magnesium compound has been converted to magnesium chloride, the resulting particulate mixture comprising magnesium chloride and inorganic oxide is separated from the components of the liquid phase. This can be accomplished by merely filtering or decanting off the liquid. Most preferably the resulting solid is washed several times with an alkane solvent to assure that substantially all the components that are soluble in the alkane solvent are removed. A particular preferred embodiment involves conducting sufficient washing that the resulting solid mixture is substantially free of components that are soluble in heptane at 20°C.

The resulting magnesium chloride, inorganic oxide particulate support is then contacted with a solution of an organic reducing agent. Suitable organometallic compounds for the reduction step include organometallic compounds of Groups II and III of the Periodic Table of Elements. Some examples of such reducing agents include dihydrocarbyl magnesium compounds, such as described above; organo zinc compounds of the formula ZnR_{2-y}X_{y} in which R is the same or a different alkyl group having 2 to 12 carbon atoms, X is chlorine or bromine, and y is an integer or fraction such that 0≦y≦1; organoaluminum compounds of the formula AlR_{3-z}X_{z} in which R is the same or a different alkyl group having 2 to 12 carbon atoms, X is chlorine or bromine, and z is an integer or fraction such that 0≦z≦2; and organo boron compounds of the formula BR₃ wherein each R is the same or a different alkyl group having 2 to 12 carbon atoms. Currently preferred reducing agents include triethylaluminum, ethylaluminum sesquichloride, ethyl aluminum dichloride, diethylaluminum chloride, diethyl zinc, and triethylborane.

The amount of reducing agent used is preferably that sufficient to obtain optimum reaction between the solid and the transition metal compound in the next step. The optimum amount of reducing agent employed can be determined by routine experimentation. Obviously it is possible to use excess amounts of the reducing agent since excess reducing agent would be separated when the resulting solid is separated from the components in the solution following the reduction treatment.

The reaction of the reducing agent with the solid can be performed over a wide range of temperatures. Typically it would be carried out at a temperature in the range of about -30°C to about 100°C, more typically about 10°C to about 40°C. The optimum time for the reaction can be determined by routine experimentation. Typically the reducing agent and the solid are stirred together in a solvent for the reducing agent for about 30 minutes to an hour and then the solid is allowed to settle and the liquid is decanted off. It is generally preferred that the resulting solid then be washed several times with a solvent for the reducing agent. Most preferably the solid is washed until substantially all the components that are soluble in heptane at 20°C have been removed.

The resulting reduced particulate solid is then contacted with a liquid form of a transition metal compound of metals of Groups IVA, VA, VIA, or VIII of the Periodic Table of Elements. Some non-limiting examples of such compounds are titanium and vanadium halides, e.g. titanium tetrachloride, vanadium tetrachloride, vanadium oxytrichloride, and vanadium and titanium alkoxides wherein the alkoxide is a branched or unbranched alkyl radical having 1 to 20 carbon atoms, more preferably about 1 to 6 carbon atoms. Also included are titanium and vanadium alkoxy halide compounds. Halogenated tetravalent titanium compounds of the formula TiXₙ(OR')₄₋ₙ are particularly preferred, wherein X is Br, Cl, or I, R' is a hydrocarbyl radical selected from saturated aliphatic, saturated cycloaliphatic, and aromatic groups containing 1 to 12 carbon atoms, and n is n integer in the range of 1 to 3. The currently preferred transition metal compound is titanium tetrachloride. It is also within the scope of the present invention to employ complexes of such transition metal compounds with organic electron donors.

The temperature employed for the contacting between the solid and the liquid form of the transition metal compound is not considered to be particularly critical. Typically, that contacting would be carried out at a temperature in the range of between about -30°C and about 110°C with string, more typically about 10°C to about 40°C. The optimum time for the contacting can be determined by routine experimentation, the object being to obtain the desired amount of supported transition metal on the solid. The amount of transition metal compound employed can also vary over a wide range and the optimum amount can be determined by routine experimentation. Typically, however, the molar ratio of the transition metal compound to the magnesium chloride in the solid would be in the range of from about 0.125:1 to about 5:1 or more. The transition metal compound and the solid are more typically stirred together at a temperature in the range of about 0°C to about 100°C, and still more preferably 20°C to 40°C for about 10 to 120 minutes and then the solids are allowed to settle. The liquid is decanted off and the catalyst is washed several times with a hydrocarbon solvent. Preferably the solid is washed to remove substantially all the components that are soluble in heptane at a temperature of 20°C. The recovered solid catalyst can then be stirred in a dry or slurry form and is suitable for use in the polymerization of olefins.

If desired, the solid catalyst can be subjected to prepolymerization before use in actual preparation of polymer. Typically this involves contacting the catalyst with an alpha olefin having 4 to 12 carbon atoms under prepolymerization conditions to form a pre-polymerized catalyst component comprising about 5 to about 80 weight percent prepolymer, more preferably about 5 to 25 weight percent. Some non-limiting examples of olefins which can be used to form prepolymer include ethylene, butene-1, hexene-1, octene-1, decene-1, 4-methylpentene-1, and the like. Although a cocatalyst is not always necessary, the prepolymerization typically is conducted in the presence of a cocatalyst. The temperature and pressure are not critical. Typically temperatures in the range of 0°C to 110°C are used. Generally any organometallic cocatalyst known to be useful for transition metal catalysts is considered suitable. Alkyl aluminum compounds are currently preferred. The prepolymerization is currently preferred to be started at a slow rate, thus it is desirable to start at a low temperature.

The inventive solid catalyst, whether prepolymerized or not, is suitable for use in the polymerization olefins. If prepolymerized, it is often desirable to combine the catalyst with a fumed silica such as Cab-O-Sil HS5 to aid in feeding of the catalyst to the reactor. The solid catalyst is generally used in combination with an organometallic cocatalyst of the type known in the art as useful as cocatalyst for transition metal compounds. Typically, the cocatalyst would be selected from aluminum alkyls, alkylaluminum halides, and alkylaluminum hydrides in which the alkyl group each have 1 to 8 carbon atoms. Currently preferred cocatalysts are triethylaluminum, diethylbutylaluminum, diethylaluminum chloride, trihexylaluminum, and the like. The molar ratio of the cocatalyst to the transition metal of the inventive solid catalyst can vary over a wide range but typically is in the range of about 5:1 to about 200:1, more preferably about 15:1 to about 50:1. For some applications, such as the polymerization of alpha olefins having 3 or more carbons, it is sometimes desirable to include an electron donor in the catalyst system, either a separate component or as a complex with the cocatalyst.

The catalyst of this invention can be used for the polymerization of ethylene, propylene, butylene, pentene, hexene, 4-methylpentene-1 and higher alpha alkenes and also for mixtures thereof. They can also be used in the copolymerization of one or more alpha olefins with polyunsaturated compounds, such as butadiene. They are particularly suited for the polymerization of ethylene, optionally together with an amount preferably not exceeding 20 mol percent of another alpha olefin.

It is considered that the inventive catalyst could be employed in solution, gas phase, and slurry phase polymerizations; however, it is particularly suitable for slurry phase polymerizations. Slurry phase or particle form polymerization temperature and pressure conditions are generally selected to assure that polymer can be recovered as slurry of discreet particles in the liquid diluent. Typically this would involve polymerization temperatures in the range of about 60°C to about 110°C. More generally about 80°C to about 110°C. In a continuous slurry polymerization, a suitable reactor such as a loop reactor is continuously charged with suitable quantities of liquid diluent, catalyst, cocatalyst, polymerizable compounds, and hydrogen, if any in any desirable order. The reaction product comprising polymer is continuously withdrawn and the polymer recovered as appropriate, generally by flashing the liquid diluent and unreacted monomers and drying and recovering the resulting polymer particles.

A further understanding of the present invention and its various objects and advantages will be provided by the following examples.

### Example I

### Preparation of magnesium chloride in the absence of inorganic oxide

First, 50 mL of a 1-molar dibutylmagnesium heptane solution (0.05 mol) was diluted with an additional 45 gm of heptane in a nitrogen purged pop bottle. While stirring at room temperature, 5 mL of dry nitrogen purged diisoamylether (0.023 mol) was added. No visible change occurred. Then the mixture was placed in an oil bath at 25°C and 12 mL (0.11 mol) of dry nitrogen purged tertiary butyl chloride was added at a rate of about 3.3 mL/min and then stirred for about 3 hours at 25°C after all the tertiary butyl chloride had been added. No reaction was immediately obvious. Sometime between 1 and 2 hours, a white precipitate formed. After the 3 hours, the precipitate was allowed to settle and washed 5 times with heptane at room temperature. The white solid was then dried and placed in a dry box.

### Example II

### Comparative Catalyst (No Reducing Agent)

A slurry of 0.251 gm of the magnesium chloride-containing solid of Example I was slurried in heptane. Then 1.2 mL of titanium tetrachloride was added. After 1 hour of stirring at room temperature, the liquid was decanted off and the solid was washed 5 times with heptane at room temperature. After drying under a nitrogen purge, the resulting solid catalyst had a yellow color.

### Example III

### Alternative Comparative Catalyst (Using Reducing Agent)

This experiment uses a procedure like that taught in U.S. 4,921,920. In this case, 0.5 gm of the magnesium chloride produced in Example I was placed in a nitrogen purged pop bottle and slurried in nitrogen purged heptane. Then 4.2 mL of a 25 weight percent solution of ethylaluminum dichloride was added and the mixture stirred at room temperature for 30 minutes before being washed 3 times with heptane. The solid turned from an off-white to a pale yellow. Then 2.4 mL of titanium tetrachloride (0.022 mol) was added and the mixture stirred at room temperature. At first no obvious change occurred, but then the mixture went from yellow to orange to a peach color. When the mixture had stopped changing color at about 1 hour and 15 minutes, the solid was allowed to settle. The burnt orange liquid was removed, and the solid was washed with heptane at room temperature until the washed liquid no longer appeared smokey. The resulting solid was lavender and was dried.

### Example IV

### Precipitating Magnesium Chloride in the Presence of Small Amounts of Silica

In this case, 0.2 gm of a silica obtained from Philadelphia Quartz under the name MS-2540 was sealed in a small pop bottle and slurried in 10 gm of heptane. Prior to use, the silica was calcined at 600°C in air to produce an inorganic solid substantially free of water and hydroxyl groups. The slurry of the silica was purged with nitrogen to remove air. Then 20 mL of a 1 molar solution of dibutylmagnesium in heptane was added. Then 2 mL of dry, nitrogen purged diisoamylether was added, followed by 4.8 mL of nitrogen purged tertiary butyl chloride. The tertiary butyl chloride was added at a rate of about 3.3 mL per minute. The resulting mixture was stirred at room temperature. After only 30 minutes, there was evidence of precipitation. This is a significant contrast to the preparation described in Example I and indicates that the silica had a desirable effect on the precipitation rate. After stirring for 6 1/2 hours at room temperature, the solid was allowed to settle and was washed 5 times with heptane. The washed solid was then dried with a nitrogen purge. The amount of solid recovered was 2.115 gm. Based on the reasonable assumption that all the silica was included in the solid, this indicates that this resulting solid support contained about 90.5 weight percent magnesium dichloride and only 9.5 weight percent silica.

Then 0.753 gm of the resulting magnesium chloride, silica support was sealed in a pop bottle under nitrogen and slurried in about 33 ml of heptane. Then 5.7 mL of a 25 weight percent ethylaluminum dichloride hexane solution was added and the mixture stirred at room temperature for 30 minutes. The solid was allowed to settle and the liquid was decanted. The solid was then washed 3 times with heptane at room temperature. The solid was then covered with heptane and 3.3 mL of titanium tetrachloride was added. The resulting mixture was then stirred at room temperature for 1 hour and 25 minutes. After this time, the catalyst was allowed to settle and the liquid was decanted. The catalyst was washed 5 times with heptane at room temperature until the wash no longer showed the presence of titanium tetrachloride. The solid was then dried under nitrogen to give a lavender solid.

### Example V

In this experiment, 1.009 gm of precalcined silica, Philadelphia Quartz MS-2540, and a stirring bar was sealed in a pop bottle in a nitrogen atmosphere. Then 10.6 mL of a 1 molar solution of dibutylmagnesium was added while stirring followed by 9 gm of heptane. Then 1.06 mL of diisoamylether was added. Then 2.54 mL of tertiary butyl chloride was added at a rate of 3.3 mL/min. The resulting mixture was allowed to stir for 4 1/2 hours at room temperature. The resulting solid was washed 5 times with heptane. The magnesium dichloride, silica support in this case is about 50 weight percent silica.

This resulting support was then reslurried in about 22 mL of heptane and 4.2 mL of a 25 weight percent hexene solution of ethylaluminum dichloride was added and the mixture stirred for 30 minutes at room temperature. The solid was then allowed to settle and was washed 3 times with heptane. The washed solid was then reslurried in heptane to a level just covering the magnet. Then 2.4 mL of titanium tetrachloride was added and the mixture was stirred for 1 hour and 40 minutes. The mixture turned a light charcoal gray. After settling, the orange liquid on the top was drawn off and the solid was washed 5 times with heptane and then dried under nitrogen. The dry catalyst was white with a slight tinge of gray.

### Example VI

In this experiment, 0.276 gm of the MS-2540 silica which had been pre-calcined at 600°C was sealed in a pop bottle with a stirring bar under a nitrogen atmosphere. Then 2.9 mL of a 1 mol heptane solution of dibutylmagnesium was added while stirring. Then 3.8 mL of heptane was added. Then 0.29 mL of diisoamylether was added while the stirring was continued. Next, 0.7 mL of tertiary butyl chloride was added while stirring was continued. The mixture was stirred for 4 hours and 45 minutes and the solid was washed 5 times with heptane. Then the solid was covered with about 33 mL of heptane and 2.31 mL of a 25 weight percent hexane solution of ethylaluminum dichloride was added. This mixture was stirred for 30 minutes at room temperature. The resulting solid was washed 3 times with heptane and then the resulting washed solid was just covered with heptane. Then 1.32 mL of titanium tetrachloride was added and the mixture allowed to stir for 1 hour and 15 minutes. After settling of the solid, the light yellow-orange liquid was drawn off and the solid was washed 5 times with heptane before drying with a nitrogen purge.

### Comparative Example VII

In this case, 1 gm of the pre-calcined MS-2540 silica and a stirring bar were sealed in a high pressure tube in a nitrogen atmosphere. The dry silica having a pore volume of 2.5 mL/gram was moistened with 2.3 mL of a 1 molar heptane solution of dibutylmagnesium and shaken until the moisture appeared to be evenly distributed. Then 3 mL of heptane was added followed by 0.23 mL of dry nitrogen purged diisoamylether. The mixture was shaken to ensure uniform distribution. Thus in this case the dibutyl magnesium and the ether were deposited in the pores of the silica rather than being in a solution of a slurry of silica. Then 0.55 mL of dry nitrogen purged tertiary butyl chloride was slowly added trying to simulate an addition rate of about 3.3 mL per minute. The resulting mixture was again shaken and allowed to stir for 5 hours and 45 minutes with occasional shaking. After settling, the solid was washed 3 times with heptane. The resulting solid was added to fresh heptane then 1.7 mL of a 25 weight percent hexane solution of ethylaluminum dichloride was added and the mixture stirred for 30 minutes at room temperature after shaking. The mixture was washed 3 times with heptane and then fresh heptane was added 10 mL above the sediment line. Then 1 mL of titanium tetrachloride was added and the mixture shaken and allowed to stir for 1 hour and 15 minutes at room temperature. No color change was noted. The solid remained yellow. After shaking for an additional 1 hour and 30 minutes, the solid was allowed to settle and was washed 5 times with heptane before drying with nitrogen.

### Comparative Example VIII

In this example, as in Example VII, the amount of magnesium alkyl solution employed was such that the magnesium alkyl is located in the pores of silica rather than in the solution when the halogenating agent is added.

In this case, 1.003 gm of the pre-calcined MS-2540 silica and a stir bar was sealed in a pop bottle in a nitrogen atmosphere. Then 2.5 mL of a 1 molar heptane solution of dibutylmagnesium was added slowly while the bottle was thoroughly shaken. Then 3 mL of additional heptane was added to more thoroughly moisten the solid and 0.25 mL of dry nitrogen purged diisoamylether was added. The bottle was shaken to ensure even distribution of the ether and then 0.6 mL of dry nitrogen purged tertiary butyl chloride was added. The bottle was again shaken and additional heptane was used to wash down the sides until all the solid was in the bottom. The resulting mixture was allowed to stir for 4 hours at room temperature before washing 5 times with heptane and drying with nitrogen. The resulting washed solid was slurried in 33 mL of heptane and then 2.12 mL of a 25 weight percent hexane solution of ethylaluminum dichloride was added and the mixture was allowed to stir for 30 minutes at room temperature. The resulting solid was then washed three times with heptane. After washing, the solid was very pale yellow. Heptane was added 18 mL above the solid level and then 1.15 mL of titanium tetrachloride was added while stirring. This mixture was allowed to stir for 1 hour and 25 minutes and room temperature. This resulted in a liquid having a pale burnt orange color and a solid having a yellow-green tinge. The solid was washed 5 times with heptane and dried with nitrogen. After drying, the solid became an almost undetectable pinkish lavender on white. The color faded to a yellow before the catalyst was used in polymerization.

### Example IX

The catalysts prepared as described in the foregoing examples were evaluated for their effectiveness in the copolymerization of ethylene and hexene under slurry polymerization conditions.

A one gallon autoclave reactor was used for polymerizations. Before the ethylene was polymerized, the reactor was reactivated with a hot heptane and a triethylaluminum (TEA) wash. Heptane and 1.0 mL of 15 weight percent TEA in heptane was added to the reactor and heated in excess of 125°C for 15 minutes while stirring at a low speed. String was then shut off and the hot wash was released through the bottom dump valve. A nitrogen purge was used to ensure that all of the wash was flushed out of the reactor. After closing the bottom dump valve, the reactor was cooled by running cooling water through the jacket. During this cooling process, the reactor was repeatedly pressured and depressured with isobutane. The agitator was set at a low speed to expedite the cooling process. Isobutane was used as a heat transfer agent to shorten the cooling time.

After the reactor had cooled to room temperature, stirring was stopped, the pressure released, and the charge-port opened under a slight purge of isobutane vapor. The catalyst and co-catalyst were both charged under the isobutane purge before closing the charge nut on the charge port. The isobutane vapor purge was stopped and nitrogen was used to pressure in 2 liters of isobutane while sting at a low speed. After the isobutane was charged to the reactor, the stirring speed was increased to 1180 rpm. The reactor was heated to 20° below the run temperature before adding the desired amount of hydrogen, which was measured by pressure drop from a 2.25 L charge vessel. The hydrogen line was then securely blocked off from the reactor. When the reactor temperature reached 3° below the run temperature, ethylene and hexene-1 was added. The hexene-1 was used in the amount of 90 grams.

Ethylene was used to pressure in the hexene-1. The total pressure of the reactor was held constant at the desired level of about 324 psi with a steady flow of ethylene for the duration of the polymerization. Temperature was held constant after reaching the run set point. The length of the polymerization was determined as the time elapsed from the initial introduction of ethylene until the time when the flow of ethylene was shut off. Typical polymerizations lasted 60 minutes.

After the run was complete, stirring was stopped and the ethylene pressure was released to the flare. The reactor was then purged with nitrogen, as needed, to remove any residual vapors before opening the reactor to the atmosphere. The polymer was removed from the reactor and dried in a vacuum oven at approximately 70°C. The recovered polymer was evaluated for various characteristics.

The melt index (MI) and high load melt index (HLMI) were measured using ASTM-1238 conditions of 190/2.16 and 190/21.6 respectively. Bulk densities in lbs/ft³ were measured by weighing a 100 mL graduated cylinder in which polymer fluff had been lightly tapped. Polymer densities were determined according to ASTM-D-1505 using compression molded discs of polymer. The shear ratio is equal to HLMI/MI. The ppm of Ti refers to the amount of Ti in the polymer. The variables involved and the results obtained are summarized in the following table.

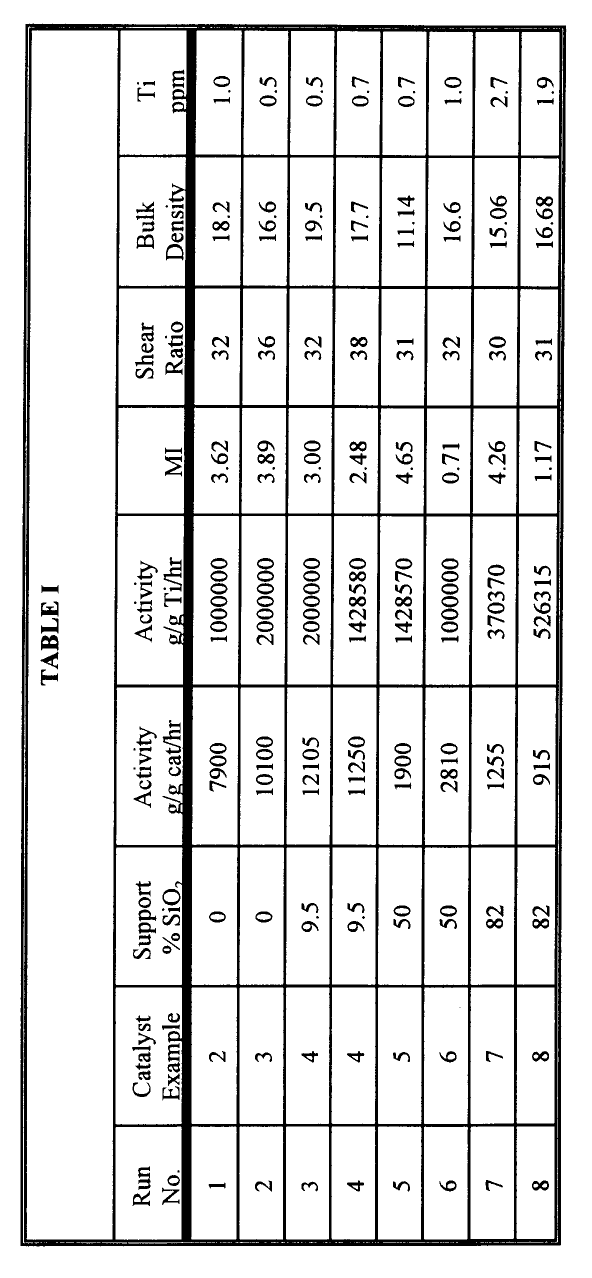

A comparison of polymerization Run Nos. 1 and 2 reveals that a more active catalyst is obtained if one treats the precipitated magnesium chloride with a reducing agent prior to contacting it with the transition metal compound. Polymerization Nos. 3 and 4 carried out using the catalyst prepared in the presence of the inorganic oxide produced polymer particles that were much larger than those produced in polymerization Run No. 2 which employed a catalyst prepared in the absence of the inorganic oxide. The results of polymerizations 3 and 4 are also particularly interesting in that they reveal that catalyst of Example IV was just as active, if not more active, as the catalyst of Example III in terms of grams of polymer per gram of solid catalyst even though the solid catalyst of Example IV included a significant percentage of inorganic oxide which would normally be viewed as an inorganic diluent which would not add anything to the activity of the catalyst.

Polymerization Nos. 5 and 6 reveal that the catalyst prepared from a solid containing about 50 weight percent of the inorganic oxide were less active than the catalyst employed in Run Nos. 3 and 4, in terms of grams of polymer per gram of solid catalyst. The catalysts were, however, highly active in terms of grams of polymer produced per gram of titanium and the polymer particles were larger than those produced with the catalysts of Example III.

Polymerizations 7 and 8 employed a catalyst prepared from the magnesium alkyl which was in the silica before being contacted with the halogenating agent. In this case, the activity in terms of grams of polymer per gram of solid catalyst were much lower than that of the catalyst of Example III, which contain no silica.

### Example X

It has also been determined that polymer produced using the inventive catalysts produces a significantly different type of film than one produced using a catalyst of the type prepared in Example III. When silica was absent from the catalyst, while the film was somewhat transparent, it was subject to melt fracture. With an inventive catalyst containing silica, at an equivalent shear ratio, the film did not exhibit melt fracture and it processed about 20% faster. It also had excellent bubble stability.

In those film evaluations an inventive catalyst was employed that was prepared on a larger scale. Specifically 30 g of MS-2540 silica was slurried in heptane and charged to a 10 gallon Pflauder reactor. The temperature control was set to 20°C and 14.5 pounds of 14 weight percent dibutyl magnesium heptane solution were added and the mixture was stirred at 240 rpm. Next, 1.16 pounds of diisoamyl ether were added to the reactor. The dispersion system was turned on and 2.9 pounds of t-butyl chloride were added over a 30 minute period. The mixture was stirred at this temperature for 12 hours. The agitator was stopped and the solid allowed to settle for 30 minutes. The liquid was decanted and 4 gallons of hexane were added and the mixture was stirred for 10 minutes. The solid was allowed to settle and the washing process repeated another three times.

Then 4 gallons of hexane were added to the reactor and the mixture was stirred for 10 minutes before 8.5 pounds of 25 weight percent triethylaluminum in hexane was added. The mixture was stirred for 30 minutes before the agitator was stopped. The solid was allowed to settle for 30 minutes, followed by the liquid being decanted. The solid was washed 2 times as described above.

After the final wash, 4 gallons of hexane was added and the mixture stirred for 10 minutes. Next, 11.55 pounds of titanium tetrachloride was added and allowed to stir for 30 minutes. After this time the agitator was stopped and the catalyst was allowed to settle for 30 minutes before the liquid was decanted. The catalyst was washed 4 times as described above.

The catalyst was then reslurried in 4 gallons of hexane and cooled to about 5°C. Then 0.2 pounds of a 25 weight percent hexane solution of triethylaluminum was added. Then enough ethylene was pressured in to produce a catalyst containing about 16 weight percent prepolymer. The reaction was allowed to continue until the pressure dropped below 2 psi. The reactor was then flushed of any unreacted ethylene. The solid was separated from the liquid and washed twice with hexane.

## Claims

1. A process for producing a solid polymerization catalyst comprising
(i) admixing an inorganic oxide with an organic solution of a dihydrocarbyl magnesium compound, optionally containing an organic electron donor compound such as aliphatic mono-oxygen ethers, to form a slurry and
(ii) then combining that slurry with a chlorinating agent capable of converting the dihydrocarbyl magnesium compound to magnesium dichloride,
(iii) then separating the resulting solid from the components in the liquid phase to result in a solid support comprising magnesium chloride and the inorganic oxide,
(iv) then contacting the separated solid support with a solution of an organic reducing agent,
(v) then separating the resulting solid from the components of the liquid phase,
(vi) then contacting the recovered solid with a liquid form of a transition metal compound, and
(vii) then separating that resulting solid from the components in the liquid phase.

2. A process according to claim 1, wherein the dihydrocarbyl magnesium compound is selected from those of the formula MgR¹R² wherein R¹ and R² are identical or different hydrocarbyl radicals containing 1 to 12 carbon atoms and/or wherein the chlorinating agent is selected from alkyl chlorides containing 3 to 12 carbon atoms and/or wherein the reducing agent is selected from organometallic compounds of Groups II and III of the Periodic Table, in particular selected from organo zinc compounds of the formula ZnR_{2-y}X_{y} in which each R is the same or different alkyl group having 2 to 12 carbon atoms, X is chlorine or bromine, and y is an integer or fraction such that 0≦y≦1 or selected from organoboron compounds of the formula BR₃ wherein each R is the same or different alkyl group having 2 to 12 carbon atoms or selected from organoaluminum halides having the formula AlR_{3-z}X_{z}, wherein each R is the same or different alkyl group having 2 to 12 carbon atoms, X is chlorine or bromine, and z is an integer or fraction such that 0≦z≦2.

3. A process according to claim 2, wherein the transition metal compound is selected from halogenated tetravalent titanium compounds of the formula TiXₙ(OR')₄₋ₙ wherein X is Br, Cl, or I; R' is a hydrocarbyl radical selected from saturated aliphatic, saturated cycloaliphatic and aromatic groups containing 1 to 12 carbon atoms; and n is an integer in the range of 1 to 3 and/or wherein the inorganic oxide comprises silica.

4. A process according to any of claims 1 to 3, wherein the dihydrocarbyl magnesium compound comprises dibutylmagnesium and/or wherein the chlorinating agent comprises tertiary butyl chloride and/or wherein the reducing agent contains an alkyl aluminum selected from ethyl aluminum dichloride and triethyl aluminum.

5. A process according to any of claims 1 to 4, wherein the solid support resulting from the reaction between the hydrocarbyl magnesium compound and the chlorinating agent is separated from the components in the liquid phase and subjected to washing so that the solid is substantially free of components that are soluble in heptane at 20 °C before that solid is contacted with the reducing agent and/or wherein the solid resulting from the reaction between the solid support and the reducing agent is subjected to washing so that the solid is substantially free of components that are soluble in heptane at 20 °C before that solid is contacted with the transition metal compound and/or wherein the solid product resulting from the reaction of the reduced solid with the transition metal compound is washed so that the solid is substantially free of compounds that are soluble in heptane at 20 °C before that solid is employed as a polymerization catalyst.

6. A process according to any of claims 1 to 5, wherein the transition metal compound is titanium tetrachloride.

7. A solid polymerization catalyst produced by the process of any of claims 1 to 6.

8. A process for polymerizing an olefin comprising contacting at least one olefin under polymerization conditions with a catalyst produced by the process of any of claims 1 to 6.

9. A process according to claim 8, wherein the polymerization is conducted under slurry polymerization conditions.

10. A process according to claim 9, wherein the polymerization is conducted in a continuous loop reactor and said monomer comprises ethylene.
